# FASCICULE DE BREVET EUROPEEN

(11) **EP 0 455 556 B1**
(45) Date de publication et mention de la délivrance du brevet: **01.06.1994**
(21) Numéro de dépôt: 91401151.5
(22) Date de dépôt: 30.04.1991
(51) Int. Cl.: F16D 3/50

(54) **Dispositif d'accouplement élastique amorti entre deux disques tournants coaxiaux**
Gedämpfte elastische Kupplungsvorrichtung zwischen zwei koaxialen drehenden Scheiben
Damped flexible coupling between two coaxial rotating discs

(30) Priorité: 04.05.1990 FR 9005666
(43) Date de publication de la demande: 06.11.1991
(73) Titulaire: HUTCHINSON, F-75008 Paris (FR)
(72) Inventeur: Simon, Jean-Michel, F-92140 Clamart (FR)
(74) Mandataire: Behaghel, Pierre

(56) Documents cités:
- EP-A- 0 059 267
- EP-A- 0 133 340
- DE-U- 8 811 849
- FR-A- 1 295 753
- FR-A- 2 557 656
- GB-A- 2 082 730

## Description

L'invention concerne un dispositif d'accouplement élastique amorti entre deux disques menant et mené, coaxiaux et parallèles tournants, le disque menant étant destiné à entraîner le disque mené en rotation dans un sens ou dans l'autre de sorte que la transmission du couple d'entraînement puisse se faire progressivement au moins dans une plage angulaire déterminée, chacun desdits disques comportant à cet effet au moins un appui pour l'extrémité d'un élément élastique de transmission du couple, constitué essentiellement d'un matériau composite à module d'élasticité relativement élevé, associé à une masse élastique d'amortissement.

Le problème à la base de l'invention est de faire en sorte que l'un des disques tournants puisse transmettre son couple à l'autre progressivement, à savoir élastiquement, avec un amortissement propre à empêcher la transmission des vibrations du disque menant au disque mené.

Ce problème peut se poser en particulier, quoique non exclusivement, dans les embrayages à friction pour automobiles. Dans les dispositifs classiques, l'effort de torsion entre l'arbre d'entrée et l'arbre de sortie au moment de l'embrayage est transmis par un ensemble de ressorts hélicoïdaux disposés tangentiellement sur un cercle coaxial au système. Leurs extrémités possèdent un premier système d'appuis sur le disque axialement mobile qui supporte les garnitures de l'embrayage, et un second système d'appuis sur un voile du moyeu de ce disque, de sorte qu'ils sont comprimés quel que soit le sens d'entraînement en rotation du disque, ce qui permet l'accouplement élastique, en rotation, entre ce dernier et le moyeu d'entraînement de l'arbre mené.

Un inconvénient de ces dispositifs d'accouplement à ressorts réside dans le fait que l'amortissement est faible et variable au cours du temps, n'étant assuré en général que par un frottement latéral des ressorts métalliques sur les parois de leurs logements dans le disque.

Un autre inconvénient est que ce dispositif -fortement non linéaire- ne permet pas d'obtenir facilement des courses importantes et une bonne progressivité dans l'effort transmis.

Une autre solution consiste à remplacer les ressorts métalliques et leurs butées par des plots en élastomère (de type EPDM généralement). Cette solution présente les inconvénients suivants :
- fluage dynamique de l'élastomère qui est sollicité à température élevée (> 120°C),
- impossibilité de régler indépendamment l'élasticité et l'amortissement.

Le but essentiel de la présente invention est d'éviter ces inconvénients, et en particulier :
- d'obtenir un meilleur amortissement ;
- d'augmenter la course angulaire (d'environ 50 %) nécessaire pour la transmission du couple nominal, ceci pour augmenter la progressivité de la transmission du couple; et
- de pouvoir régler indépendamment l'élasticité et l'amortissement.

A cet effet, un dispositif d'accouplement du type général défini au début sera, conformément à la présente invention, principalement caractérisé en ce que ledit matériau composite se présente sous la forme d'au moins une lame ou d'un ensemble de lames parallèles enrobées dans ladite masse élastique d'amortissement et orientées de telle manière, entre les appuis correspondants, respectivement solidaires du disque menant et du disque mené, que la transmission du couple entre ces disques s'opère essentiellement par une flexion desdites lames, et l'amortissement par un cisaillement de ladite masse élastique, celle-ci étant à cet effet adhérisée auxdites lames ainsi qu'auxdits appuis.

En d'autres termes, ledit élément élastique possède une structure en sandwich, le nombre de lames à haut module d'élasticité -assurant l'effet de ressort-enrobées par la masse élastique d'amortissement, pouvant d'ailleurs être quelconque. Cette flexion des lames composites engendre une réaction qui assure bien la progressivité de la variation du couple transmis. Le cisaillement de la masse élastique entre les lames permet par ailleurs d'obtenir un excellent amortissement des fluctuations du couple, et donc de limiter la transmission des vibrations.

Il va de soi que, comme dans la technique actuelle, on prévoira entre lesdits disques autant d'éléments élastiques qu'il en sera nécessaire pour la transmission du couple et, sur chacun de ces disques, le nombre d'appuis correspondants. Il pourra y avoir par exemple quatre tels éléments élastiques entre lesdits disques tournants.

En tout cas, cette caractéristique essentielle de l'invention permet d'éliminer les inconvénients cités plus haut et d'obtenir dans tous les cas les avantages suivants :
- une grande progressivité du couple transmis ;
- un amortissement important et reproductible ;
- un réglage indépendant de l'élasticité et de l'amortissement ;
- une excellente tenue en fatigue du matériau composite ;
- un fluage limité ;
- un encombrement réduit.

La mise en flexion des lames peut être obtenue de différentes façons. La plus simple est de faire travailler ces lames comme des poutres ancrées à leurs deux extrémités et amorties.

A cet effet, un dispositif conforme à la présente invention peut encore être caractérisé en ce que lesdits appuis sont décalés radialement l'un par rapport à l'autre, lesdites lames s'étendant essentiellement en direction radiale.

Les lames composites peuvent également être préformées en arc de cercle ou analogue, ce qui leur permet encore de travailler en flexion.

Ainsi, un dispositif conforme à l'invention peut encore être caractérisé en ce que lesdits appuis sont décalés angulairement l'un par rapport à l'autre, lesdites lames s'étendant essentiellement sous forme arquée entre ces appuis.

Dans les deux cas, on peut limiter le débattement angulaire relatif des disques tournants, et donc cette mise en flexion des lames, grâce à des butées positionnées de façon appropriée sur l'un ou l'autre desdits disques tournants. Ces butées assurent également la sécurité en cas de rupture du composite.

Par ailleurs, pour uniformiser les contraintes en flexion, et éviter un décollement au niveau desdits appuis, on prévoit que lesdits éléments élastiques, et notamment ladite masse élastique de ces éléments, sont conformés de sorte à permettre la déformation en flexion desdits éléments avec une uniformisation des contraintes, et que ces mêmes appuis sont également établis, sous forme arquée ou analogue, pour s'adapter à la déformation desdits éléments élastiques.

Pour ce qui est des matériaux utilisés, on pourra prévoir avantageusement que ledit matériau composite est essentiellement à base de fibres de verre, imprégnées d'une résine thermodurcissable de type époxy ou vinyl-ester, et que ladite masse élastique est constituée par un élastomère tel que du caoutchouc naturel ou du caoutchouc de synthèse à base de butyl, d'EPDM ou de SBR (au styrol butadiène).

Trois modes de réalisation de l'invention vont maintenant être décrits à titres d'exemples nullement limitatifs, avec référence aux figures du dessin annexé dans lequel :
- la **figure 1** est une vue partielle, avec arrachement, d'un élément élastique de dispositif d'accouplement conforme à l'invention, dans le cas où les deux appuis associés, respectivement solidaires de chaque disque tournant, sont décalés radialement ;
- la **figure 2** est une vue analogue dans le cas d'un décalage purement angulaire desdits appuis ;
- la **figure 3** représente en coupe radiale une variante selon laquelle les éléments élastiques sont constitués sous la forme d'un tronçon de tube à masse élastique d'amortissement intérieure ; et
- la **figure 4** est une vue en coupe selon la ligne IV-IV de la figure 3.

Sur les figures, les disques tournants coaxiaux qu'il s'agit d'accoupler élastiquement et de façon amortie, l'un étant menant et l'autre mené, ont été référencés 1 et 2. On peut considérer qu'il s'agit de deux disques métalliques plats, coaxiaux et parallèles. Leur sens de rotation relatif est indifférent. Les appuis pour les extrémités des éléments élastiques d'accouplement ont été référencés 4 pour le disque inférieur 1 et 5 pour le disque supérieur 2, lequel est partiellement arraché.

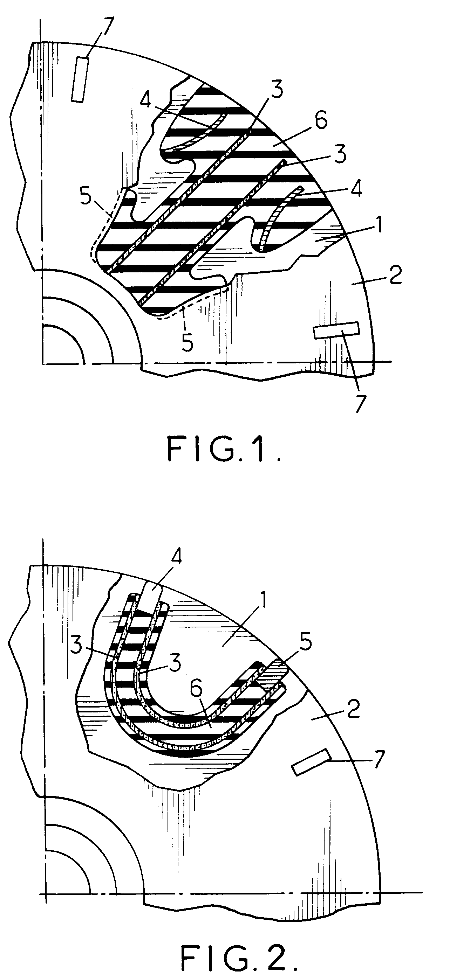

Dans le mode de réalisation de la figure 1, on voit que les appuis 4 et 5 ont une forme particulière (arquée) adaptée aux déformations de flexion potentielles de l'élément élastique. Il en est de même pour la masse élastique 6 de cet élément, par exemple du caoutchouc naturel, qui enrobe, en y étant adhérisé, ces mêmes appuis 4 et 5 ainsi que les lames radiales de matériau composite 3 (fibres de verre ou analogue enrobées dans une résine thermodurcissable polymérisée).

Ceci étant, on voit que l'élément élastique 3-6 travaillera essentiellement en flexion lors de la phase progressive de transmission du couple moteur entre le disque menant et le disque mené, ceci avec un excellent amortissement, dû au cisaillement du caoutchouc entre les lames.

Sur cette même figure 1, on a référencé en 7 deux butées de limitation du débattement angulaire relatif des deux disques, le débattement maximal autorisé étant par exemple de 30°.

Dans le mode de réalisation de la figure 2, on peut utiliser les mêmes matériaux que précédemment pour réaliser les éléments élastiques 3, 6. Les lames 3 travaillent encore en flexion, mais à la manière d'un arc, les appuis métalliques extrêmes 4 (solidaire du disque 1) et 5 (solidaire du disque 2) étant décalés angulairement l'un par rapport à l'autre ; l'amortissement est encore obtenu par cisaillement de la masse élastique 6, et la limitation du débattement angulaire par la butée 7.

Dans l'un et l'autre modes de réalisation, il va de soi que les éléments élastiques 3, 6 seront en nombre suffisant (par exemple au nombre de quatre) pour assurer la transmission du couple, et seront disposés à espacements angulaires égaux sur les disques pour l'équilibrage des masses.

A titre d'exemple, les lames composites 3 pourront avoir une épaisseur de l'ordre de 2 mm et une largeur de l'ordre de 16 mm.

A titre d'autre variante, enfin, il est à noter que l'on pourrait constituer lesdits éléments élastiques de liaison en rotation sous toute autre forme, par exemple sous la forme d'un disque plein (ou de secteurs de disque) coaxial adhérisé entre les deux disques tournants, ce disque pouvant incorporer des renforts composites sous forme de joncs. On pourrait encore les constituer sous la forme d'un tronçon de tube elliptique 3 ou analogue, en matériau composite. Ce tube pourrait être monté entre les appuis respectifs 4, 5 des disques tournants d'une façon analogue à celle du mode de réalisation de la figure 2, ses parois opposées étant connectées intérieurement par une masse élastique d'amortissement 6.

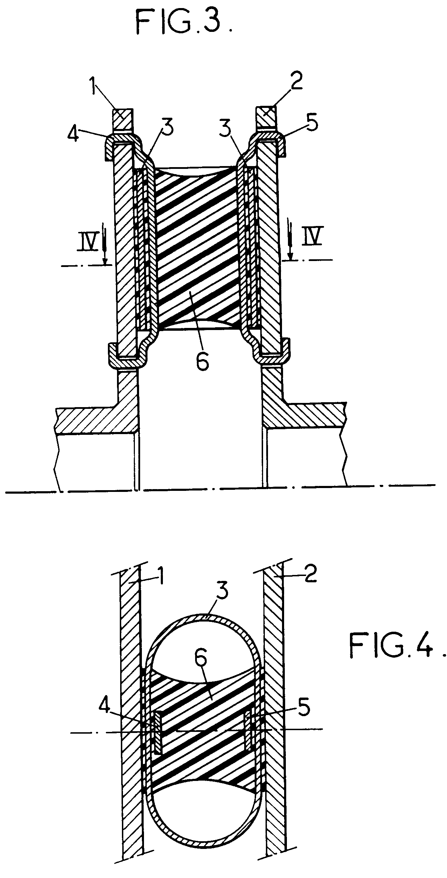

Un tel mode de réalisation a été représenté aux figures 3 et 4. On voit sur la figure 3 que l'on a constitué ces appuis 4, 5 sous la forme d'un genre d'agrafes passant à l'intérieur du tube 3 et serties respectivement sur les disques 1 et 2.

## Revendications

1. Dispositif d'accouplement élastique amorti entre deux disques (1, 2) menant et mené, coaxiaux et parallèles tournants, le disque menant (1) étant destiné à entraîner le disque mené (2) en rotation dans un sens ou dans l'autre de sorte que la transmission du couple d'entraînement puisse se faire progressivement au moins dans une plage angulaire déterminée, chacun desdits disques (1, 2) comportant à cet effet au moins un appui (4, 5) pour l'extrémité d'un élément élastique de transmission du couple, constitué essentiellement d'un matériau composite (3) à module d'élasticité relativement élevé, associé à une masse élastique (6) d'amortissement, caractérisé en ce que ledit matériau composite (3) se présente sous la forme d'au moins une lame ou d'un ensemble de lames parallèles enrobées dans ladite masse élastique d'amortissement (6) et orientées de telle manière, entre les appuis correspondants (4, 5), respectivement solidaires du disque menant (1) et du disque mené (2), que la transmission du couple entre ces disques (1, 2) s'opère essentiellement par une flexion desdites lames, et l'amortissement par un cisaillement de ladite masse élastique, celle-ci étant à cet effet adhérisée auxdites lames ainsi qu'auxdits appuis (4, 5).

2. Dispositif selon la revendication 1, caractérisé en ce que lesdits appuis (4, 5) sont décalés radialement l'un par rapport à l'autre, lesdites lames (3) s'étendant essentiellement en direction radiale.

3. Dispositif selon la revendication 1, caractérisé en ce que lesdits appuis (4, 5) sont décalés angulairement l'un par rapport à l'autre, lesdites lames (3) s'étendant essentiellement sous forme arquée entre ces appuis.

4. Dispositif selon l'une quelconque des revendications précédentes, caractérisé en ce qu'il comporte sur l'un ou l'autre desdits disques tournants (1, 2), aux emplacements appropriés, des butées (7) de limitation du débattement angulaire relatif desdits disques.

5. Dispositif selon l'une quelconque des revendications 1 à 4, caractérisé en ce que lesdits éléments élastiques, et notamment ladite masse élastique (6) de ces éléments, sont conformés de sorte à permettre la déformation en flexion desdits éléments (3, 6) avec une uniformisation des contraintes.

6. Dispositif selon la revendication 5, caractérisé en ce que lesdits appuis (4, 5) sont également établis, sous forme arquée ou analogue, pour s'adapter à la déformation desdits éléments élastiques (3, 6).

7. Dispositif selon l'une quelconque des revendications précédentes, caractérisé en ce que ledit matériau composite (3) est essentiellement à base de fibres de verre, imprégnées d'une résine thermodurcissable de type époxy ou vinyl-ester.

8. Dispositif selon l'une quelconque des revendications précédentes, caractérisé en ce que ladite masse élastique (6) est constituée par un matériau élastomère du type caoutchouc naturel ou de synthèse.

9. Dispositif selon l'une quelconque des revendications 1 à 7, caractérisé en ce que ladite masse élastique (6) est à base de butyl, d'EPDM ou de SBR.

10. Dispositif d'accouplement élastique amorti entre deux disques menant et mené, coaxiaux et parallèles tournants, le disque menant étant destiné à entraîner le disque mené en rotation dans un sens ou dans l'autre de sorte que la transmission du couple d'entraînement puisse se faire progressivement au moins dans une plage angulaire déterminée, chacun desdits disques (1, 2) comportant à cet effet au moins un appui (4, 5) pour l'extrémité d'un élément élastique de transmission du couple, constitué essentiellement d'un matériau composite (3) à module d'élasticité relativement élevé, associé à une masse élastique (6) d'amortissement, caractérisé en ce que ledit élément élastique est réalisé sous la forme d'un disque plein (ou de secteurs de disque) coaxial éventuellement armé d'un matériau composite et adhérisé entre lesdits disques tournants, lesdits appuis étant alors constitués par les faces en regard de ces disques.

11. Dispositif selon la revendication 10, caractérisé en ce que ledit élément élastique est réalisé sous la forme d'un tronçon (3) de tube en matériau composite, fixé entre deux appuis (4, 5) desdits disques tournants, les deux parois opposées de ce tronçon étant connectées intérieurement par une masse élastique (6) d'amortissement.

## Patentansprüche

1. Gedämpfte elastische Kupplungsvorrichtung zwischen zwei sich drehenden Scheiben (1, 2), von denen die eine treibend und die andere angetrieben ist und die koaxial und parallel zueinander angeordnet sind, wobei die treibende Scheibe (1) dazu dient, die angetriebene Scheibe in beiden Richtungen drehend anzutreiben, so daß die Übertragung des Antriebsdrehmomentes progressiv wenigstens in einem bestimmten Winkelbereich erfolgen kann und beide Scheiben (1, 2) zu diesem Zweck wenigstens eine Abstützung (4, 5) für das Ende eines elastischen Elementes zur Übertragung des Drehmomentes enthalten, das im wesentlichen aus einem zusammengesetzten Material (3) mit einem verhältnismäßig hohen Elastizitätsmodul besteht, das mit einer elastischen Dämpfungsmasse verbunden ist, dadurch gekennzeichnet, daß das zusammengesetzte Material (3) in Form wenigstens einer Lamelle oder einer Anordnung von parallelen Lamellen vorliegt, die in die elastische Dämpfungsmasse (6) eingebettet und zwischen den entsprechenden Abstützungen (4, 5), die an der treibenden Scheibe (1) bzw. der angetriebenen Scheibe (2) befestigt sind, so ausgerichtet sind, daß die Übertragung des Drehmomentes zwischen den Scheiben (1, 2) im wesentlichen durch eine Biegung der Lamellen und die Dämpfung durch eine Scherbeanspruchung der elastischen Masse erfolgt, die zu diesem Zweck sowohl an den Lamellen als auch an den Abstützungen (4, 5) angebracht ist.

2. Kupplungsvorrichtung nach Anspruch 1, dadurch gekennzeichnet, daß die Abstützungen (4, 5) in radialer Richtung zueinander versetzt sind und die Lamellen (3) sich im wesentlichen in radialer Richtung erstrecken.

3. Kupplungsvorrichtung nach Anspruch 1, dadurch gekennzeichnet, daß die Abstützungen (4, 5) winklig zueinander versetzt sind und daß sich die Lamellen (3) im wesentlichen bogenförmig zwischen diesen Abstützungen erstrecken.

4. Kupplungsvorrichtung nach einem der vorhergehenden Ansprüche, dadurch gekennzeichnet, daß an einer der beiden sich drehenden Scheiben (1, 2) an geeigneten Stellen Anschläge (7) zur Begrenzung der relativen Winkelschwingung der Scheiben vorgesehen sind.

5. Kupplungsvorrichtung nach einem der Ansprüche i bis 4, dadurch gekennzeichnet, daß die elastischen Elemente und insbesondere die elastische Masse (6) der Elemente so ausgebildet sind, daß sie die Biegeverformung der Elemente (3, 6) mit einer Vergleichmäßigung der Spannungen ermöglichen.

6. Vorrichtung nach Anspruch 5, dadurch gekennzeichnet, daß die Abstützungen (4, 5) ebenfalls bogenförmig oder ähnlich ausgebildet sind, um sich der Verformung der elastischen Elemente (3, 6) anzupassen.

7. Kupplungsvorrichtung nach einem der vorhergehenden Ansprüche, dadurch gekennzeichnet, daß das zusammengesetzte Material (3) im wesentlichen auf der Basis von Glasfasern gebildet ist, die mit einem in der Wärme aushärtbaren Harz vom Typ eines Epoxyds oder Vinylesters imprägniert sind.

8. Vorrichtung nach einem der vorhergehenden Ansprüche, dadurch gekennzeichnet, daß die elastische Masse (6) aus einem elastomeren Material aus natürlichem oder synthetischen Kautschuk besteht.

9. Vorrichtung nach einem der vorhergehenden Ansprüche 1 bis 7, dadurch gekennzeichnet, daß die elastische Masse (6) auf der Basis von Butylkautschuk, EPDM oder SBR ist.

10. Gedämpfte elastische Kupplungsvorrichtung zwischen zwei sich drehenden Scheiben (1, 2), von denen die eine treibend und die andere angetrieben ist und die koaxial und parallel zueinander angeordnet sind, wobei die treibende Scheibe (1) dazu dient, die angetriebene Scheibe in beiden Richtungen drehend anzutreiben, so daß die Übertragung des Antriebsdrehmomentes progressiv wenigstens in einem bestimmten Winkelbereich erfolgen kann und beide Scheiben (1, 2) zu diesem Zweck wenigstens eine Abstützung (4, 5) für das Ende eines elastischen Elementes zur Übertragung des Drehmomentes enthalten, das im wesentlichen aus einem zusammengesetzten Material (3) mit einem verhältnismäßig hohen Elastizitätsmodul besteht, das mit einer elastischen Dämpfungsmasse verbunden ist, dadurch gekennzeichnet, daß das elastische Element die Form einer koaxialen vollen Scheibe (oder Sektoren der Scheibe) hat, die gegebenenfalls mit einem zusammensesetzten Material verstärkt und zwischen den sich drehenden Scheiben befestigt ist, wobei die Abstützungen dann aus den Oberflächen bestehen, die den Scheiben gegenüberliegen.

11. Vorrichtung nach Anspruch 10, dadurch gekennzeichnet, daß das elastische Element die Form eines Rohrstückes (3) aus zusammengesetzten Material hat, das zwischen zwei Abstützungen (4, 5) der sich drehenden Scheiben befestigt ist, wobei die beiden entgegengesetzten Wandungen des Rohrstückes innen über eine elastische Dämpfungsmasse (6) verbunden sind.

## Claims

1. Damped flexible coupling device between two rotating driving and driven discs (1, 2), coaxial and parallel, the driving disc being intended to drive the driven disc (2) in rotation in one direction or the other so that the driving torque can be transmitted progressively at least in one given angular range, each of the said discs (1, 2) having for this purpose at least one support (4, 5) for the end of an elastic torque-transmission member, consisting essentially of a composite material (3) with a relatively high modulus of elasticity, associated with an elastic damping body (6), characterised in that the said composite material (3) is in the form of at least one strip or an assembly of parallel strips encased in the said elastic damping body (6) and orientated in such a way, between the corresponding supports (4, 5), fixed respectively to the driving disc (1) and the driven disc (2), that the transmission of the torque between these discs (1, 2) is achieved essentially by bending of the said strips, and the damping by a shearing action of the said elastic body, the latter for this purpose being bonded to the said strips and to the said supports (4, 5).

2. Device according to Claim 1, characterised in that the said supports (4, 5) are offset radially with respect to each other, the said strips (3) extending essentially in a radial direction.

3. Device according to Claim 1, characterised in that the said supports (4, 5) are offset angularly with respect to each other, the said strips (3) extending essentially in a curved shape between these supports.

4. Device according to any one of the preceding Claims, characterised in that it has, on one or other of the said rotating discs (1, 2), at appropriate points, stops (7) to limit the relative angular movement of the said discs.

5. Device according to any one of Claims 1 to 4, characterised in that the said elastic members, and in particular the said elastic body (6) of these members, are shaped in such a way as to allow the said members (3, 6) to deform by bending, the stresses being made uniform.

6. Device according to Claim 5, characterised in that the said supports (4, 5) are also set up, in a curved shape or similar, so as to adapt to the deformation of the said elastic members (3, 6).

7. Device according to any one of the preceding claims, characterised in that the said composite material (3) is essentially based on glass fibres, impregnated with a thermosetting resin of the epoxy or vinyl ester type.

8. Device according to any one of the preceding claims, characterised in that the said elastic body (6) consists of an elastomer of the natural or synthetic rubber type.

9. Device according to any one of Claims 1 to 7, characterised in that the said elastic body (6) is based on butyl rubber, EPDM or SBR.

10. Damped flexible coupling device between two rotating driving and driven discs, coaxial and parallel, the driving disc being intended to drive the driven disc in rotation in one direction or the other so that the driving torque can be transmitted progressively at least in one given angular range, each of the said discs (1, 2) having for this purpose at least one support (4, 5) for the end of an elastic torque-transmission member, consisting essentially of a composite material (3) with a relatively high modulus of elasticity, associated with an elastic damping body (6), characterised in that the said elastic member is produced in the form of a solid coaxial disc (or sectors of a disc) optionally reinforced with a composite material and bonded between the said rotating discs, the said supports then being formed by the faces facing these discs.

11. Device according to Claim 10, characterised in that the said elastic member is produced in the form of a length (3) of tube made of composite material, fixed between two supports (4, 5) for the said rotating discs, the two opposite walls of this length being connected on the inside by an elastic damping body (6).
